# EUROPEAN PATENT APPLICATION

(11) **EP 4 749 261 A1**
(43) Date of publication of application: **27.05.2026**
(21) Application number: 25214907.5
(22) Date of filing: 11.11.2025
(51) Int. Cl.: G01N 3/08, G01N 3/36, G01N 3/38

(54) **HIGH CYCLE FATIGUE TEST RIG WITH AXIAL PRELOAD CAPABILITY**

(30) Priority: 21.11.2024 US 202418954919
(71) Applicant: RTX Corporation, Farmington, CT 06032 (US)
(72) Inventor: Lomenzo Jr., Richard A., Enfield, 06082 (US)
(74) Representative: Schmitt-Nilson Schraud Waibel Wohlfrom Patentanwälte Partnerschaft mbB

(57) **Abstract**

A high cycle fatigue test rig including a base; a first preload element attached to the base; a second preload element attached to the base; a test specimen attached to the base; the test specimen having a first end and a second end opposite the first end; the test specimen located in between the first preload element and the second preload element; the first preload element and the second preload element attached to the test specimen proximate the second end; a first clamp in operative communication with the first preload element; a second clamp in operative communication with the second preload element; an end cap in operative communication with the second end of the test specimen, the first preload element and the second preload element; and a dynamic force generator in operative communication with the end cap.

## Description

The present disclosure is directed to the improved high cycle fatigue test rig.

Current HCF (High Cycle Fatigue) test rigs are comprised of high cost equipment designed for a broad range of applications. This precludes the deployment of multiple rigs due to cost constraints. Additionally, these rigs have limitations on the speed of testing.

In accordance with the present disclosure, there is provided a high cycle fatigue test rig comprising: a base; a first preload element attached to the base; a second preload element attached to the base; a test specimen attachable to the base; the test specimen having a first end and a second end opposite the first end; the test specimen located in between the first preload element and the second preload element; the first preload element and the second preload element attachable to the test specimen proximate the second end; a first clamp in operative communication with the first preload element; a second clamp in operative communication with the second preload element; an end cap in operative communication with the second end of the test specimen, the first preload element and the second preload element; and a dynamic force generator in operative communication with the end cap.

Particular embodiments further may include at least one, or a plurality of, the following optional features, alone or in combination with each other:

A further embodiment of any of the foregoing embodiments may additionally and/or alternatively include the test specimen, the first preload element and the second preload element are supported as cantilevered from the base.

A further embodiment of any of the foregoing embodiments may additionally and/or alternatively include the first preload element and the second preload element are configured to transfer a load force to the test specimen.

A further embodiment of any of the foregoing embodiments may additionally and/or alternatively include the high cycle fatigue test rig further comprising sensors in operative communication with the first actuator and the second actuator and the first preload element and the second preload element; wherein the sensors are configured to monitor the load force.

A further embodiment of any of the foregoing embodiments may additionally and/or alternatively include the dynamic force generator is configured to apply a vibratory load to the test specimen.

A further embodiment of any of the foregoing embodiments may additionally and/or alternatively include the high cycle fatigue test rig further comprising a controller in operative communication with the dynamic force generator, and in operative communication with the first actuator and the second actuator.

A further embodiment of any of the foregoing embodiments may additionally and/or alternatively include the first preload element and the second preload element are configured to transfer an axial load to the test specimen along an axis of the test specimen.

In accordance with the present disclosure, there is provided a high cycle fatigue test rig comprising a base; a first preload element attached to the base; a second preload element attached to the base; a test specimen attached to the base; the test specimen having a first end and a second end opposite the first end; the test specimen located in between the first preload element and the second preload element; the first preload element and the second preload element attached to the test specimen proximate the second end; a first clamp in operative communication with the first preload element; a second clamp in operative communication with the second preload element; an end cap in operative communication with the second end of the test specimen, the first preload element and the second preload element; a dynamic force generator in operative communication with the end cap; and a controller in operative communication with the dynamic force generator, and in operative communication with the first actuator and the second actuator.

Particular embodiments further may include at least one, or a plurality of, the following optional features, alone or in combination with each other:

A further embodiment of any of the foregoing embodiments may additionally and/or alternatively include the first preload element and the second preload element are configured to transfer an axial load to the test specimen along a long axis of the test specimen.

A further embodiment of any of the foregoing embodiments may additionally and/or alternatively include the test specimen, the first preload element and the second preload element are supported as cantilevered from the base.

A further embodiment of any of the foregoing embodiments may additionally and/or alternatively include the high cycle fatigue test rig further comprising a dynamic displacement probe in operative communication with the controller, the dynamic displacement probe configured to monitor a dynamic tip deflection of the test specimen.

A further embodiment of any of the foregoing embodiments may additionally and/or alternatively include the high cycle fatigue test rig further comprising sensors in operative communication with the first preload element and the second preload element; wherein the sensors are configured to monitor a load force.

A further embodiment of any of the foregoing embodiments may additionally and/or alternatively include the first preload element and the second preload element are configured to transfer a load force to the test specimen.

In accordance with the present disclosure, there is provided a process for a high cycle fatigue test rig comprising forming a base; attaching a first preload element to the base; attaching a second preload element to the base; attaching a test specimen to the base; the test specimen having a first end and a second end opposite the first end; locating the test specimen in between the first preload element and the second preload element; attaching the first preload element and the second preload element to the test specimen proximate the second end; coupling a first clamp in operative communication with the first preload element; coupling a second clamp in operative communication with the second preload element; coupling an end cap in operative communication with the second end of the test specimen, the first preload element and the second preload element; coupling a dynamic force generator in operative communication with the end cap; and coupling a controller in operative communication with the dynamic force generator, and in operative communication with the first actuator and the second actuator.

Particular embodiments further may include at least one, or a plurality of, the following optional features, alone or in combination with each other:

A further embodiment of any of the foregoing embodiments may additionally and/or alternatively include the process further comprising configuring the first preload element and the second preload element to transfer an axial load to the test specimen along a long axis of the test specimen.

A further embodiment of any of the foregoing embodiments may additionally and/or alternatively include the process further comprising supporting the test specimen, the first preload element and the second preload element cantilevered from the base.

A further embodiment of any of the foregoing embodiments may additionally and/or alternatively includethe process further comprising coupling a dynamic displacement probe in operative communication with the controller; and configuring the dynamic displacement probe to monitor a dynamic tip deflection of the test specimen.

A further embodiment of any of the foregoing embodiments may additionally and/or alternatively include the process further comprising configuring the first preload element and the second preload element to transfer a load force to the test specimen.

A further embodiment of any of the foregoing embodiments may additionally and/or alternatively include the process further comprising coupling sensors in operative communication with the first preload element and the second preload element; and configuring the sensors to monitor a load force.

A further embodiment of any of the foregoing embodiments may additionally and/or alternatively include the process further comprising configuring the dynamic force generator to apply a vibratory load to the test specimen.

Other details of the high cycle fatigue test rig are set forth in the following detailed description and the accompanying drawings wherein like reference numerals depict like elements.
Fig. 1 is a top view schematic representation of an exemplary high cycle fatigue test rig.
Fig. 2 is a side view schematic representation of an exemplary high cycle fatigue test rig.
Fig. 3 is an end view schematic representation of an exemplary end cap.

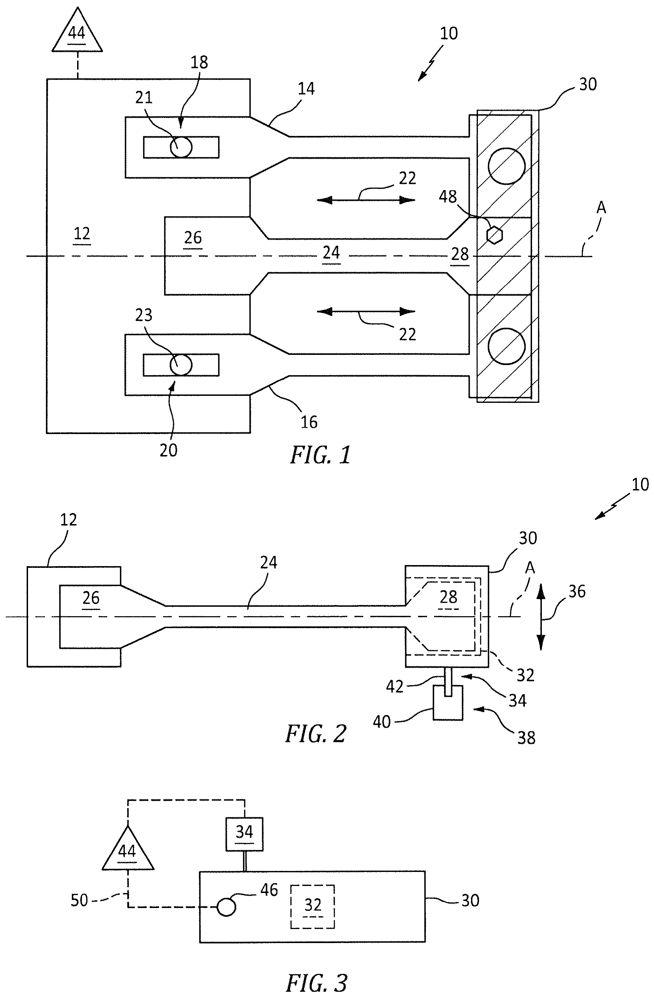

Referring now to Fig. 1, Fig. 2, and Fig. 3, showing an exemplary high cycle fatigue test rig, or simply test rig 10. The test rig 10 includes a base 12. The base 12 is configured to support the elements of the test rig 10. A first preload element 14 is attached to the base 12. The first preload element 14 is supported as a cantilevered beam from the test rig 12. A second preload element 16 is attached to the base 12. The second preload element 16 is supported as a cantilevered beam from the test rig 12.

A first clamp 18 is in operative communication with the first preload element 14. The first clamp 18 is configured to secure the first preload element 14 after a load force 22 has been applied to the first preload element 14. A second clamp 20 is in operative communication with the second preload element 16. The second actuator 20 is configured to secure the second preload element 16 after the load force 22 has been applied to the second preload element 16. The load force 22 can be applied by a load force mechanism (not shown) to create tension or to create compression. In an exemplary embodiment, the first clamp 18 and the second clamp 20 can secure the preload elements 14, 16 in order to apply equal load forces 22. A fastener 21 can be coupled to the first clamp 18. A fastener 23 can be coupled to the second clamp 20.

A test specimen 24 can be attached to the base 12. The test specimen 24 can be located in between the first preload element 14 and the second preload element 16. The test specimen 24 is also supported as a cantilevered beam from the test rig 12. That is the test specimen 24 is only supported at a first end 26. A second end 28 of the test specimen 24 is not supported by the base 12. The second end 28 is distal from the first end 26. The test specimen 24 is shown as a rectilinear elongated beam. The test specimen 24 includes an axis A. The axis A is the long axis of the test specimen 24 that extends through the first end 26 and the second end 28.

Both the first preload element 14 and the second preload element 16 are attached to the test specimen 24 proximate the second end 28. The first preload element 14 and the second preload element 16 are configured to transfer the load force 22 to the test specimen 24. The first preload element 14 and the second preload element 16 are configured to transfer uniform loads to the test specimen 24. The first preload element 14 and the second preload element 16 are configured to transfer purely axial loads to the test specimen 24 along the axis A, with no torsion.

The first preload element 14 and the second preload element 16 can apply a tensile load to the test specimen 24 in an axial direction along the axis A. The test specimen 24 can be under tension during the cycle fatigue testing. The tensile load can be maintained as a constant tensile load during cycle fatigue testing.

The first preload element 14 and the second preload element 16 can apply a compressive load to the test specimen 24 in an axial direction along the axis A. The test specimen 24 can be under compression during the cycle fatigue testing. The compressive load can be maintained as a constant compressive load during cycle fatigue testing.

The test rig 10 can include an end cap 30. The end cap 30 can be in operative communication with the second end 28 of the test specimen 24. The end cap 30 can be in operative communication with the first preload element 14 and the second preload element 16. The end cap 30 can include a test specimen receiver 32 as seen in Fig. 2 and Fig. 3. The test specimen receiver 32 is configured to attach the test specimen 24 to the end cap 30.

The test rig 10 can include a dynamic force generator 34. The dynamic force generator 34 is configured to apply a vibratory load 36 to the test specimen 24. The vibratory load 36 can be radially applied relative to the axis A of the test specimen 24. The dynamic force generator 34 can be configured in a variety of modes that can generate the vibratory load 36 to the test specimen 24. The dynamic force generator 34 can be configured as an electromagnetic load generator or a hydraulic actuator 38. In the exemplary embodiment shown, the dynamic force generator 34 can be configured as an electrodynamic shaker 40.

The dynamic force generator 34 can impart a dynamic force that flexes and vibrates the test specimen 24 forming a dynamic tip deflection of the test specimen 24. The combined cantilevered beam system of the first preload element 14, second preload element 16 and test specimen 24 is designed to have a resonant frequency of several hundred Hz.

A controller 44 can be in operative communication with the dynamic force generator 34. The controller 44 can be in operative communication with a dynamic displacement probe 46 to monitor dynamic tip deflection that is feed to the controller 44 to run the test rig 10.

The test rig 10 can include sensors 48 in operative communication with the first preload element 14 and the second preload element 16. The sensors 48 can enable accurate application of the load force 22.

In an exemplary embodiment, the preload elements 14, 16 can be extended outward from the base 12 and secured by the clamps 18, 20 to provide an axial tensile load 22 to the test specimen 24. The sensors 48 on the preload elements 14, 16 can provide information to confirm the preload is maintained throughout testing. The dynamic displacement probe 46 can monitor dynamic tip deflection of the test specimen 24 and feed signals 50 to the controller 44 to run the test rig 10. The test rig 10 can deflect the test specimen 24 second end 28 at a resonant frequency of the test specimen 24 to create a high cycle fatigue until failure of the test specimen 24.

A technical advantage of the disclosed high cycle fatigue test rig includes a reduced cost configuration as compared to current electrodynamic shakers for performing HCF testing.

Another technical advantage of the disclosed high cycle fatigue test rig includes an expanded range of materials and conditions that can be tested in a short period time.

Another technical advantage of the disclosed high cycle fatigue test rig includes allowing for multiple rigs to be built and run in parallel to further decrease material characterization time.

Another technical advantage of the disclosed high cycle fatigue test rig includes the ability to generate HCF data more quickly.

Another technical advantage of the disclosed high cycle fatigue test rig includes a test rig that is run in resonance, offering decreased test time over expensive rigs.

Another technical advantage of the disclosed high cycle fatigue test rig includes the low compact size envisioned to be on the order of a cubic foot in size, which allows for multiple rigs to be deployed in a small space.

Another technical advantage of the disclosed high cycle fatigue test rig includes the potential to be deployed near the point of generation of specimens at vendors, with a specific application to qualification of additive manufacturing vendors.

There has been provided a high cycle fatigue test rig. While the high cycle fatigue test rig has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A high cycle fatigue test rig comprising:
a base;
a first preload element attached to the base;
a second preload element attached to the base;
a test specimen attachable to the base; the test specimen having a first end and a second end opposite the first end; the test specimen located in between the first preload element and the second preload element; the first preload element and the second preload element attachable to the test specimen proximate the second end;
a first clamp in operative communication with the first preload element;
a second clamp in operative communication with the second preload element;
an end cap in operative communication with the second end of the test specimen, the first preload element and the second preload element; and
a dynamic force generator in operative communication with the end cap.

2. The high cycle fatigue test rig according to claim 1, wherein the test specimen, the first preload element and the second preload element are supported as cantilevered from the base.

3. The high cycle fatigue test rig according to claim 1 or 2, wherein the first preload element and the second preload element are configured to transfer a load force to the test specimen.

4. The high cycle fatigue test rig according to claim 3, further comprising:
sensors in operative communication with the first actuator and the second actuator and the first preload element and the second preload element; wherein the sensors are configured to monitor the load force.

5. The high cycle fatigue test rig according to any of claims 1 to 4, wherein the dynamic force generator is configured to apply a vibratory load to the test specimen.

6. The high cycle fatigue test rig according to any of claims 1 to 5, further comprising:
a controller in operative communication with the dynamic force generator, and in operative communication with the first actuator and the second actuator.

7. The high cycle fatigue test rig according to any of claims 1 to 6, wherein the first preload element and the second preload element are configured to transfer an axial load to the test specimen along an axis of the test specimen.

8. The high cycle fatigue test rig according to any of claims 1 to 7, wherein:
the test specimen is attached to the base; and the first preload element and the second preload element are attached to the test specimen proximate the second end;
and
a controller is in operative communication with the dynamic force generator, and in operative communication with the first actuator and the second actuator.

9. The high cycle fatigue test rig according to claim 8, wherein the first preload element and the second preload element are configured to transfer an axial load to the test specimen along a long axis of the test specimen.

10. The high cycle fatigue test rig according to claim 8 or 9, further comprising:
a dynamic displacement probe in operative communication with the controller, the dynamic displacement probe configured to monitor a dynamic tip deflection of the test specimen.

11. The high cycle fatigue test rig according to any of claims 8 to 10, further comprising:
sensors in operative communication with the first preload element and the second preload element; wherein the sensors are configured to monitor a load force.

12. A process for a high cycle fatigue test rig comprising:
forming a base;
attaching a first preload element to the base;
attaching a second preload element to the base;
attaching a test specimen to the base; the test specimen having a first end and a second end opposite the first end;
locating the test specimen in between the first preload element and the second preload element;
attaching the first preload element and the second preload element to the test specimen proximate the second end;
coupling a first clamp in operative communication with the first preload element;
coupling a second clamp in operative communication with the second preload element;
coupling an end cap in operative communication with the second end of the test specimen, the first preload element and the second preload element;
coupling a dynamic force generator in operative communication with the end cap; and
coupling a controller in operative communication with the dynamic force generator, and in operative communication with the first actuator and the second actuator.

13. The process according to claim 12, further comprising:
configuring the first preload element and the second preload element to transfer an axial load to the test specimen along a long axis of the test specimen; and/or
further comprising:
supporting the test specimen, the first preload element and the second preload element cantilevered from the base.

14. The process according to claim 12 or 13, further comprising:
coupling a dynamic displacement probe in operative communication with the controller; and
configuring the dynamic displacement probe to monitor a dynamic tip deflection of the test specimen; and/or
further comprising:
configuring the first preload element and the second preload element to transfer a load force to the test specimen.

15. The process according to any of claims 12 to 14, further comprising:
coupling sensors in operative communication with the first preload element and the second preload element; and
configuring the sensors to monitor a load force; and/or
further comprising:
configuring the dynamic force generator to apply a vibratory load to the test specimen.
